(19) **Europäisches Patentamt European Patent Office Office européen des brevets**

(11) **EP 4 693 856 A1**

(12) **EUROPEAN PATENT APPLICATION**

(43) Date of publication:
**11.02.2026 Bulletin 2026/07**

(21) Application number: **24193598.0**

(22) Date of filing: **08.08.2024**

(51) International Patent Classification (IPC):
**H02M 1/00** $^{(2006.01)}$    **H02M 3/07** $^{(2006.01)}$
**H02M 3/158** $^{(2006.01)}$    **H02M 1/14** $^{(2006.01)}$

(52) Cooperative Patent Classification (CPC):
**H02M 3/1586; H02M 1/0043; H02M 1/0095;**
**H02M 3/07;** H02M 1/0019; H02M 1/0022;
H02M 1/0025; H02M 1/14; H02M 3/01

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Jiang, Wan Lin**
**5656 AG Eindhoven (NL)**
• **TRESCASES, Olivier**
**5656 AG Eindhoven (NL)**

• **KHAN, Nameer Ahmed**
**5656 AG Eindhoven (NL)**
• **Bergveld, Hendrik Johannes**
**5656 AG Eindhoven (NL)**
• **Pigott, John**
**5656 AG Eindhoven (NL)**
• **Chaturvedi, Vikramjeet**
**5656 AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **CONTROL OF HYBRID MULTIPHASE DC-DC CONVERTERS**

(57)    Aspects of this disclosure are directed to controllers for, and methods of controlling, a hybrid multiphase DC-DC converter comprising a plurality of switched-inductor current paths, such methods comprising: comparing an output voltage with an output-reference voltage; in response to a difference between the output voltage and the output-reference voltage, adjusting a respective current control parameter of each current path; comparing a first voltage across a first flying capacitor with a first capacitor-reference voltage; and in response to a difference between the first voltage across the first flying capacitor and the first capacitor-reference voltage, modifying the respective current control parameter of a one of the current paths.

FIG. 5

**EP 4 693 856 A1**

**Description**

FIELD OF THE DISCLOSURE

This present disclosure relates to hybrid multiphase DC-DC converters and methods of controlling the same.

BACKGROUND

Applications such as electronic-control-units (ECUs) for use in automotive environments are becoming increasing prevalent and important, and present challenging requirements. For example, typically there are stringent transient requirements on the digital-core supply voltages that power the processors in such ECUs, which are not allowed to deviate by more than for example 5%, from a nominal value (typically between 0.8 V to 1.2V). Moreover, the trend towards a proliferation of on-board electronics has resulted in a shift towards 48V voltage-distribution networks, and both trends increase the need for efficient point of load (PoL) converters to meet power demands of automotive processors, which may typically be in the range of 40 to 50 W. Furthermore, the high voltage bus for such applications may be highly variable, and typically may range between 24 V and 60V. Hybrid DC-DC converters are well-placed to enable converting from a high input voltage to a low output voltage without requiring a bulky transformer, and thus have enabled efficient 48 V PoL converters. Hybrid DC-DC converters often use several parallel phases, each phase using an inductor, to reduce the overall current ripple by interleaving and to spread output power between the phases. However, fast transient response remains a challenge. Either or both of load steps, and supply voltage steps may result in imbalances between the phases of a hybrid DC-DC converter. Particularly when the input and output decoupling capacitors and flying capacitors are small, such imbalances may result in only lightly damped resonances between the phases. Although increasing series resistance could increase the damping, this will reduce the efficiency.

SUMMARY

According to a first aspect of the present disclosure, there is provided a method of controlling a hybrid multiphase DC-DC converter comprising a plurality of switched-inductor current paths, the method comprising: comparing an output voltage with an output-reference voltage; in response to a difference between the output voltage and the output-reference voltage, adjusting a respective current control parameter of each current path; comparing a first voltage across a first flying capacitor with a first capacitor-reference voltage; and in response to a difference between the first voltage across the first flying capacitor and the first capacitor-reference voltage, modifying the respective current control parameter of a one of the current paths.

Since deviations of the voltages across the flying capacitors from their expected or reference voltage values may arise from input voltage or output load-current transients,, these deviations may be observed, and used to control the timing of the switching of the switched-inductor current paths, which may result in fast response to transience in particular caused by load-current steps or supply-side voltage steps, and results in a reduction of resonances which may otherwise occur between the current paths, which resonances reduce the converter efficiency. It may be possible to reduce component sizes, such as the capacitance rating of the flying capacitors, thereby reducing the "footprint" or area requirements of the converter.

In one or more embodiments, the current control parameter of each current path is a one of a group consisting of a peak current setpoint of the respective current path, a valley current setpoint of the respective current path, and an average current setpoint of the respective current path.

In one or more embodiments, each switched-inductor current path is switchable between an on-time and an off-time, and a current in the switched-inductor increases during the on-time and decreases during the off-time. The skilled person will appreciate that during an "off-time" the inductor is not completely isolated, but is disconnected, on a supply-side from supply voltage, and typically connected to a low or ground voltage during this part of the switching cycle. In a hybrid multiphase DC-DC converter, the supply voltage for one or more of the phases is typically a voltage across one or more of the flying capacitors.

In one or more embodiments the hybrid multiphase DC-DC converter is configured to operate in a fixed-frequency mode. By fixed frequency is meant that the cycle time of a switching cycle is controlled. The skilled person will appreciate that the frequency of a fixed frequency mode control may be modified, or changed, by the controller In other embodiments, the frequency of the operation of the converter is not fixed and may vary cycle-by-cycle.

In one or more embodiments, the current control parameter of each current path is a peak current setpoint; and modifying the peak current setpoint comprises delaying an ending of the on-time in response to a negative difference between the first voltage across the first flying capacitor and the first capacitor-reference voltage, and advancing the ending of the on-time in response to a positive difference between the first voltage across the first flying capacitor and the first capacitor-reference voltage. It will be appreciated that the ending of the on-time is indirectly controlled, through modifying the peak current setpoint (since the control method is current-mode control), rather than the ending of the on-time being directly controlled, which would be the case for PWM control. Since the voltage across a flying capacitor typically only affects one or two of the switched inductor counterparts (depending on the design of the converter) deviations in the flying-capacitor voltages and may be used to control individual (or only two) of the current paths.

In one or more embodiments, the current control parameter of each current path is a valley current setpoint; and modifying the valley current setpoint comprising advancing a starting of the on-time in response to a negative difference between the first voltage across the first flying capacitor and the first capacitor-reference voltage, and delaying the starting of the on-time in response to a positive difference between the first voltage across the first flying capacitor and the first capacitor-reference voltage.

In one or more other embodiments the current control parameter of each current path is a hysteretic setpoint corresponding to a difference between a peak current and a valley current, and the hybrid multiphase DC-DC converter is configured to operate in a hysteretic mode.

In one or more embodiments in which the hybrid multiphase DC-DC converter further comprises at least one further flying capacitor, the method further comprises: comparing a respective voltage across each of at least one further flying capacitor with a respective capacitor-reference voltage, and modifying a respective control parameter of a respective one of the current paths in response to a difference between the respective voltage across the respective one of the at least one further flying capacitor and the respective capacitor-reference voltage. Thus, it may be beneficial to periodically compare each of the flying capacitor with its respective capacitor-reference value, and modify a respective current control parameter, of one - or more - current paths in response to any deviation.

In one or more embodiments, the method further comprises: comparing a second voltage across a second flying capacitor with a second capacitor-reference voltage; and modifying the respective control parameter of the one of the current paths comprising modifying the control parameter by an amount which depends on a difference between a first offset and a second offset, wherein: the first offset is the difference between the first voltage across the first flying capacitor and the first capacitor-reference voltage, and the second offset is a difference between the second voltage across the second capacitor and the second capacitor-reference voltage. Since, in some types of hybrid DC-DC converters, each flying capacitor directly affects the currents of two neighbouring current paths, the current through each current path is directly affected by the voltage across each of two flying capacitors. In such converters, it may be more efficient, and may provide a faster response, to directly modify or adjust the timing of the switching of those switched-inductor current paths in response to the difference between the two deviations between the measured and reference or expected values of the voltages across the flying capacitors.

In one or more embodiments, wherein the hybrid multiphase DC-DC converter further comprises at least one further flying capacitor, that is to say, in addition to the first and second flying capacitors, the method further comprises: comparing a respective voltage across each of at the least one further flying capacitor with a respective capacitor-reference voltage, and, in response to a difference therebetween, modifying a respective control parameter of each current path having an inductor input voltage at least partly defined by the voltage across that respective flying capacitor. Thus, it may useful to check for deviations from the expected voltages across each or all of the flying capacitors, and adjust the control parameters of any or all associated, or linked, currents paths, that is to say any current paths, whose inductor current is partly set by voltage derived from that flying capacitor. In general, and in particular for series capacitor buck converters, most of the current paths in any design are defined by the voltages across two of the flying capacitors, with the exceptions of one or both of the outermost current paths (that is to say who's inputs are closest, considered in terms of routing, to either the ground level or the supply level); that or those current paths are typically defined by the voltage across just one of the flying capacitors. The skilled person will appreciate that for some converters, such as dual-inductor hybrid converters, some inductors may be affected by, or related to, more than two capacitors.

In one or more embodiments the DC-DC converter is one of a N:1 series-capacitor buck hybrid converter, a dual-inductor hybrid converter, and a multi-inductor hybrid converter.

According to a second aspect of the present disclosure, there is provided a controller for a hybrid multiphase DC-DC converter comprising a plurality of switched-inductor current paths, the controller comprising: an outer comparison unit configured to compare an output voltage of the converter with an output-reference voltage; an outer loop adjustment circuit configured to, in response to a difference between the output voltage and the output-reference voltage, adjust a respective current control parameter of each current path; a first inner comparator configured to compare a first voltage across a first flying capacitor with a first capacitor-reference voltage; and an inner loop adjustment circuit configured to, in response to a difference between the first voltage across the first flying capacitor and the first capacitor-reference voltage, modifying the respective current control parameter of a one of the current paths.

In one or more embodiments the current control parameter of each current path is a one of a group consisting of a peak current setpoint of the respective current path, a valley current setpoint of the respective current path, and an average current setpoint of the respective current path.

In one or more embodiments, the controller further comprises a plurality of gate-control circuits configured to switch each respective switched-inductor current path between and on-state for an on-time and an off-state for an off-time, wherein a current in the switched-inductor increases during the on-time and decreases during the off-time.

In one or more embodiments, the controller is configured to operate the hybrid multiphase DC-DC converter in a fixed-frequency mode.

In one or more embodiments, the current control parameter of each current path is a peak current setpoint; and modifying the peak current setpoint comprises delaying an ending of the on-time in response to a negative difference between the first voltage across the first flying capacitor and the first capacitor-reference voltage, and advancing the ending of the on-time in response to a positive difference between the first voltage across the first flying capacitor and the first capacitor-reference voltage.

In one or more embodiments, the current control parameter of each current path is a valley current setpoint; and modifying the valley current setpoint comprises advancing a starting of the on-time in response to a negative difference between the first voltage across the first flying capacitor and the first capacitor-reference voltage, and delaying the starting of the on-time in response to a positive difference between the first voltage across the first flying capacitor and the first capacitor-reference voltage.

In one or more embodiments, the current control parameter of each current path is a hysteretic setpoint corresponding to a difference between a peak current and a valley current, and the controller is configured to operate the hybrid multiphase DC-DC converter in a hysteretic mode.

In one or more embodiments, the controller further comprises a second inner comparator configured to compare a second voltage across a second flying capacitor with a second capacitor-reference voltage; and modifying the respective control parameter of the one of the current paths comprises modifying the control parameter by an amount which depends on the sum of a first offset and a second offset, wherein: the first offset is the difference between the first voltage across the first flying capacitor and the first capacitor-reference voltage, and the second offset is a difference between the second voltage across the second capacitor and the second capacitor-reference voltage.

In one or more embodiments, the controller is configured to operate one of a N:1 series-capacitor buck hybrid converter, a dual-inductor hybrid converter, and a multi-inductor hybrid converter.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as another non-transient signal.

BRIEF DESCRIPTION OF THE DRAWINGS

Reference will now be made to the accompanying drawings, which are not necessarily drawn to scale, and wherein:

FIG. 1 shows a conventional control loop for a multiphase current-mode-controlled hybrid DC-DC converter;
FIG. 2 shows, conceptually, a scheme for a multiphase current-mode controlled hybrid DC-DC converter according to embodiments of the present disclosure;
FIG. 3 shows an example of a 4:1 series-capacitor buck DC-DC converter, configured for conventional PWM control;
FIG. 3A shows an example of a 4:1 series-capacitor buck DC-DC converter, configured for notional current-based control;
FIG. 4 shows corresponding waveforms for controlling the converter of FIG. 3A;
FIG. 5 shows an example of a 4:1 series-capacitor buck DC-DC converter, configured for control according to embodiments of the present disclosure;
FIG. 5A shows the converter of FIG. 5, during one charging phase;
FIG. 6 shows an example valley-current control scheme, in which two adjustment values are used to modify the duty-cycle of individual phases, according to embodiments of the present disclosure;
FIG. 7 shows by simulation the use of a conventional voltage-mode control scheme for the converter of FIG. 5;
FIG. 8 shows the result of using the fixed-frequency Valley-Current-Mode-Control (VCMC) scheme, according to one or more embodiments;
FIG. 9 shows a simulation, of operation of the converter illustrated in FIG. 5, without the flying-capacitor voltage measurements and adjustments;
FIG. 10 shows a simulation, of operation of the converter illustrated in FIG. 5, with the flying-capacitor voltage measurements and adjustments;
FIG 11, this illustrates a control method using a single adjustment, per phase, for each of the phases;

FIG. 12 shows simulation results for a 4:1 series-capacitor buck hybrid DC-DC converter, operated under peak current mode control, with a single adjustment term per phase; and

FIG. 13 shows simulation results for the same 4:1 series-capacitor buck hybrid DC-DC converter, operated under peak current mode control, with two adjustment terms per phase.

It should be noted that the FIG.s are diagrammatic and not drawn to scale. Relative dimensions and proportions of parts of these FIG. s have been shown exaggerated or reduced in size, for the sake of clarity and convenience in the drawings. The same reference signs are generally used to refer to corresponding or similar features in modified and different embodiments.

DETAILED DESCRIPTION

The subject disclosure relates, in general, to multiphase current-mode-controlled hybrid DC-DC converters. By hybrid is meant to that the converter includes both capacitors and inductors. Hybrid DC-DC converters may have multiple parallel phases, which may also be referred to as current paths, each including an inductor, that each contribute equally or evenly to the converter output power. Besides inductors, hybrid converters use flying capacitors to set the voltages across the inductors, which capacitors have nominal, or average, operating voltages typically at well-defined ratios (such as one-quarter, one-half and three-quarters) of the input voltage.

The present disclosure introduces a current-mode control method, wherein the individual phase current commands, that is to say, the timing of the opening and closing of the switches which control the phase may be modified based on deviations of the flying-capacitor voltages from their nominal value. The method may reduce inter-phase resonances while allowing a fast transient response even with small, that is to say, low values of, one or more of the input, output, and flying capacitors.

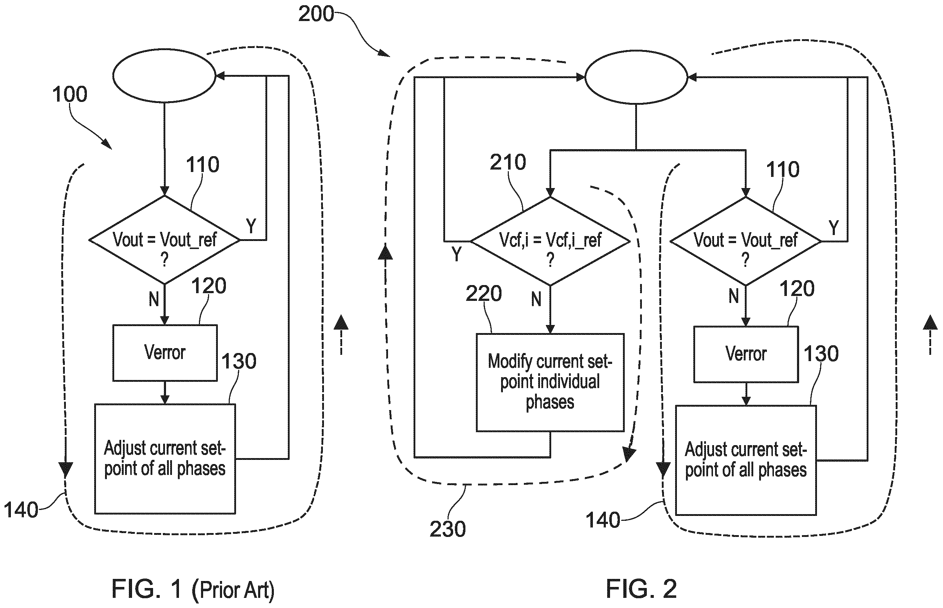

FIG. 1 shows, conceptually, a conventional control loop 100 for a multiphase current-mode controlled hybrid DC-DC converter. The control scheme periodically, at 110 compares the measured output voltage, Vout, with a desired or reference output voltage, Vout_ref. In the event that the output voltage matches the reference output voltage, no changes are required to be made to the control parameters (although the skilled person will be aware that the PID control may result in some transient-settling changes). However, in the event that the measured output voltage deviates from the reference output voltage, which may also be referred to as the output-reference voltage, as shown at 120, by an error Verror, the control scheme adjusts, at 130, the respective current setpoint for each of the phases of the converter, as shown in the control loop 140. Depending on the particular control scheme that is in operation, the setpoint of each phase may be any one of the peak current, the valley current, an average current, of each phase, for fixed-frequency operation. It will be appreciated that generally the same parameter such as peak current, valley current, etc. is used for the control of each phase. Alternatively, the converter may be operated under hysteretic control, in which a difference between a peak current and a valley current is used as the control parameter. The skilled person will appreciate that this may result in a variable frequency and is an example of a hysteretic converter. Although the control loop 140 depends on a measured voltage and in particular the output voltage Vout, it is a current-mode control loop since the parameter setpoint which is controlled relates to the current of each of the phases of the multiphase hybrid DC-DC converter.

FIG. 2 shows, conceptually, a scheme 200 for a multiphase current-mode-controlled hybrid DC-DC converter according to embodiments of the present disclosure. The controller has the same control loop 140, as described above, which may be considered as, and operate as, an outer control loop. In addition, the controller has an inner control loop 230. In this control loop, the voltages Vcf,i across one or more of the flying capacitors of the hybrid converter is or are measured and compared with expected or reference voltage values of the respective flying capacitors Vcf,i_ref. The skilled person will appreciate that in a multiphase hybrid DC-DC converter, the flying capacitors are switchably connected between the individual current paths and are charged to respective nominal values, so as to define respective voltages, on the supply side of the inductors, for the charging and discharging of the inductors. Perturbations, and in particular steps in either the input voltage, or the load current, may result in the voltages across the flying capacitors being perturbed from their expected or reference voltage values. In the event of such perturbations, the current through the current paths associated with the flying capacitors changes. This control loop can respond quickly, on a phase-by-phase basis, to perturbations such as load steps or supply voltage steps by adjusting the currents through the phases individually, to equalize the currents through the phases, thereby avoiding or minimizing inter-phase resonances, which may otherwise only slowly dampen, as discussed above. It may therefore be considered as an inner control loop.

Aspects of the present disclosure will be described in more detail, using the nonlimiting example of a 4:1 series-capacitor buck DC-DC converter. However, the skilled person will appreciate that the present disclosure is not limited to such a converter, but extends to other multiphase hybrid converters which have flying capacitors. Another nonlimiting example of such a hybrid converter is a dual-inductor hybrid configuration.

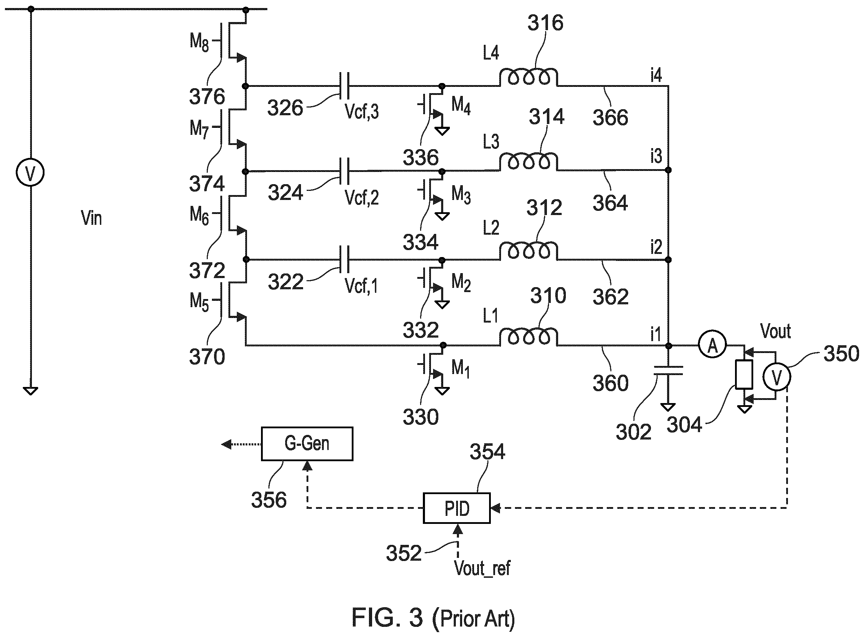

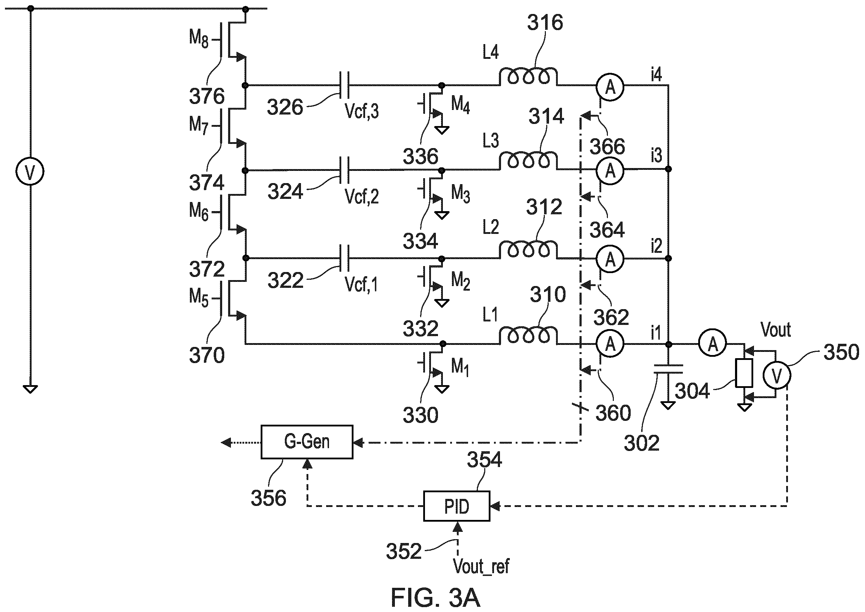

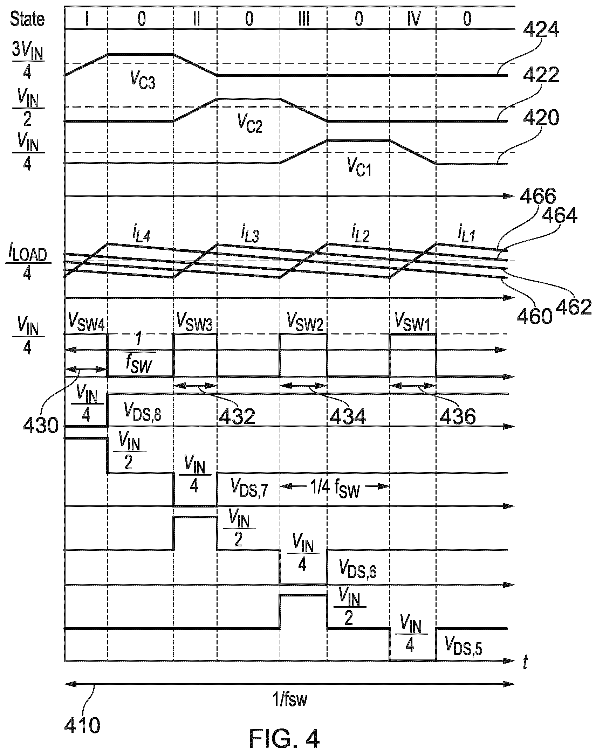

FIG. 3 shows an example of a 4:1 series-capacitor buck DC-DC converter, and FIG. 4 shows corresponding waveforms for controlling the converter. Four current paths or phases can be identified, between the input and the output.

The output includes an output capacitor 302, which is generally provided for supplying the load, which is shown as a resistive load 304 although the skilled person will appreciate that the load may be other than purely resistive. There may be an input capacitor (not shown). The four current paths or phases correspond to the four inductors (L1-L4), 310, 312, 314 and 316). There are a total (in this example) of three flying capacitors (C1-C3), 322, 324 and 326. It will be appreciated that in a more general series-capacitor buck converter topology, N phases imply the use of N inductors and N-1 capacitors.

As is shown in FIG. 4, the converter operates in a sequence of switching events, where during the full switching period (1/fsw) each of the inductor currents iL1 to iL4 (466, 464, 462 and 460) ramps up once, with a certain controlled on-time ton,1 to ton,4, (430, 432, 434 and 436), or duty cycle Di defined by

$$Di = ton,i \, / \, (1/fsw)$$

and ramps down with slope -Vout/Li during the remainder of the period. During the ramp-down part of the period, a respective "low-side" switch (M1 to M4, 330, 332, 334 and 336 respectively) connects the left-hand-side connection of the respective inductor to ground: this forces the current to ramp down with Vout on the right-hand side of each inductor. Generally, all phases use equal inductances, L1 = L2 = L3 = L4, or more generally, Li=L). Ramping up occurs by applying (Vin/4 -Vout) across each inductor Li, which happens consecutively in time as FIG. 4 shows, where each on-time ton,i of inductor Li starts 1/(4fsw) after that of Li+1. For L4, this is done by enforcing Vin-Vcf3=Vin- 3Vin/4= Vin/4; for L3 it is Vcf3-Vcf2=3 Vin/4- Vin/2= Vin/4; for L2 it is Vcf2-Vcf1= Vin/2- Vin/4= Vin/4, and for L1 it is Vcf1= Vin/4.

In conventional, pulse-width-modulation (PWM), control of such a converter as that shown in FIG. 3, the control loop (such as loop 140 shown in FIG. 1), comprises monitoring Vout 350, and comparing this with a reference output voltage level, Vout_ref 352. Any difference, Verror, is minimised using a PID (Proportional-Integral-Derivative) controller. The PID controller is configured to set appropriate setpoints to control the timing, in a gate-generation module, unit or block 356, of the on-and-off switching of each of the phases.

FIG. 3A shows the same 4:1 series-capacitor buck DC-DC converter, but configured for notional current-based control. The term "notional" is used here, since current-based control has been determined to be unstable in some circumstances for series-capacitor hybrid buck converters, and using some current control methods, so is typically not applied. The setpoints used, in current-based control, will vary according to the specific current-mode control method implemented. For example, the setpoint might may be a peak current setpoint (for peak current-mode control) or a valley current setpoint (for valley current-mode control), an average current setpoint, or even a hysteretic (that is to say difference between peak and valley) setpoint for self-oscillating or resonance (that is to say, not fixed-frequency) converter operation. The values of the respective current parameter are measured or calculated, as shown at 360, 362, 364 and 366 for each of the phase currents i1, i2, i3 and i4 respectively. The skilled person will appreciate that depending on the specific current control mechanism used, the values may be directly measured at a specific moment during the switching cycle, or may be calculated from one or more measurements made across the switching cycle. In the cases of valley or peak current-mode control, the switches are controlled in dependance on a comparison between the actual values and the setpoints, for example the opening of the respective one of M5 to M8 (370, 372, 374 and 376 respectively) in the case of peak current control.

It has been found that load steps, or input voltage steps, can invoke lightly damped resonances between the phase currents, in particular in the case of series-capacitor buck converters, when applying duty-cycle-based, or current-based, control. One reason is that variations in the duty cycle Di during which inductors Li in the 4 phases are charged, resulting from the load or supply-side step, create imbalances between the 3 flying-capacitor voltages Vcf,1, Vcf,2 and Vcf,3 (322, 324 and 326), which take time to resonate out, or damp down, between the phases. Since these converters are generally optimized for efficiency, the series damping resistance is low, and so, absent any other damping mechanism, resonances between phase inductors and flying capacitors can continue for a considerable time. This reduces efficiency, since resonances do not result in output power while inducing conduction losses, and may require over-dimensioning of the maximum current rating of the phase inductors L1 to L4 (310,312, 314 and 316). Such resonances are particularly prominent when small capacitors with low capacitance values are used for the flying capacitors, which is typically desirable to keep the Bill-of-Materials (BoM) cost low.

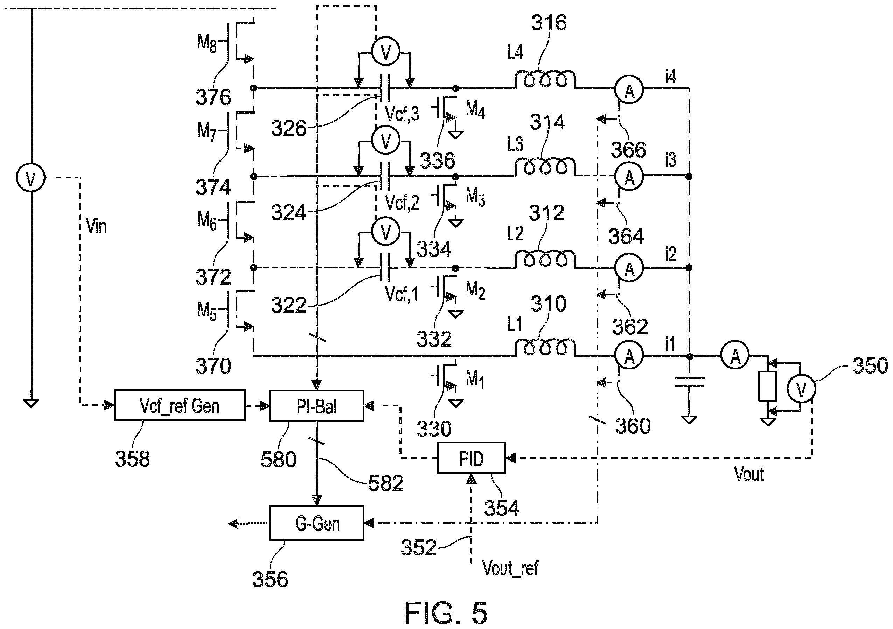

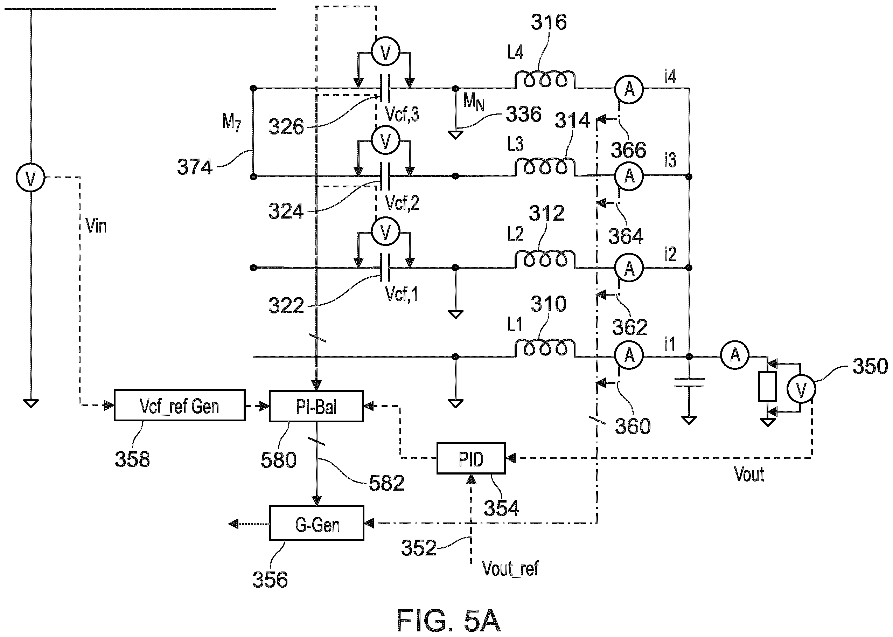

The present disclosure addresses one or more of the above issues. Although not limited thereto, application of the concept will be described for 4:1 series-capacitor hybrid buck DC-DC converter such as that shown in FIG. 5. It will be noted that the figure depicts a 4-phase converter. However, wherever appropriate, this will generalised to "N-phase" hereinbelow. This converter is the same as that shown in FIG. 3A, however, according to embodiments of the present disclosure, an additional control loop is included in the control. In particular, a respective voltage, indicative of the voltage (Vcf1, Vcf,2 and Vcf,3) across each of the flying capacitors 322, 324 and 326, is measured. The voltage may be measured directly across the capacitor, or, without limitation, a more convenient measurement point may be used - for example between the left-hand side of the capacitor and a ground. The measurements may be made at any suitable moment or moments within the switching cycle. The measurements may be made concurrently or consecutively. Each voltage is generally measured at least once per complete switching cycle (1/fsw). As has been explained above, the nominal voltage across each of the flying capacitors generally is a fixed fraction of the input voltage, the specific fraction being dependent on the type of converter. For instance in the case of an N:1 series-capacitor buck converter (which may also be referred to simply as an N:1 series converter) the ratios of each (i) of the (N -1) capacitors are (i.Vin/N).

Furthermore, it will be seen from FIG. 4 that the actual voltages across any of the flying capacitors at any specific moment in time may vary from the nominal voltage, since the flying capacitors are configured to cascade charge from Vin to the various voltage nodes, which is carried out by sequentially switching each capacitor to charge the next capacitor in the chain, which thus partially discharges the first capacitor. Thus, flying capacitor 326 is partially discharged while it charges flying capacitor 324, and subsequently flying capacitor 324 is partially discharged while it charges flying capacitor 322. As a consequence, the expected value of the voltage on the capacitor is not constant across the complete switching cycle. However, the median voltage can be calculated from measuring the peak and valley of the flying capacitors, or estimated based on the peak or valley capacitor voltage with the current information from the inductor.

Each of the voltages Vcf1, Vcf,2 and Vcf,3 is compared with a respective reference value, Vcf1_ref, Vcf,2_ref and Vcf,3_ref. As has been explained above, by choosing a suitable moment (or integrating period), during the switching cycle, the measured values are well-defined ratios of the input voltage Vin (for instance, Vcf1_ref may be Vin/4). The reference values are determined in a reference generator unit 358. The present inventors have appreciated that deviation from these values is indicative of a change in operating conditions - typically a load step or a voltage supply step. The deviation may thus provide an "early warning signal" of the perturbation, and the magnitude of the deviation deviations may be used to provide a fast control loop, or an inner loop, which may operate to quickly adapt the control of the converter so as to dampen or reduce, or even eliminate, resonances which would otherwise occur resulting from the perturbation.

In more detail, in the embodiment shown, the reference values Vcf1_ref, Vcf,2_ref and Vcf,3_ref are compared, in a balancing PI (proportional - integral) controller 580, with the actual measured voltages Vcf1, Vcf,2 and Vcf,3. Thus, inside the balancing PI controller 580, the nominal value ic derived from the outer loop of the current-mode control method is turned into individual current-mode-control references ic,1, ic,2, ic,3 and ic,4, which are passed to the gate-generation unit 356. In steady state, these 4 reference currents are theoretically equal and are at least approximately equal in real applications, but during transients, of either the load current or the input voltage, there will be transients in the flying-capacitor voltages, and hence differences between the voltages of those flying-capacitors and their references coming from the Vcf reference generation block 358. This will lead to individually-generated, and generally different, reference current values ic,1, ic,2, ic,3 and ic,4. In general, the voltage used to supply each inductor, ideally should be (Vin/N)-Vout (in the case of the four-phase converter shown, this is Vin/4 - Vout). In the example of a series-capacitor buck converter this voltage is generated by the difference in voltage of two of the flying capacitors. (It will be noted that in the case of the first phase using L1, it is the voltage across the first flying capacitor (Vcf) only. Furthermore, in the case of the last phase using LN = L4 in this embodiment, it is the voltage across the last flying capacitor Vcf,3, only.)

FIG. 5A shows the converter of FIG. 5, whilst L3 (i.e. LN-1, in the generic case) is charging. During this phase, M4 and M3 (= $M_N$ and $M_{N-1}$) and M7 (= $M_{N+3}$) are closed (and shown as solid lines) and the remaining switches are open (and thus not shown). Then:

$$V_{L,N-1} = V_{Cf,N-1} - V_{Cf,N-2} - Vout$$

$$= \frac{(N-1).Vin}{N} - \frac{(N-2).Vin}{N} - Vout = \frac{Vin}{N} - Vout \qquad (1)$$

The above equation holds in the steady state, where voltages Vcf,N-1 and Vcf,N-2 equal their reference voltages (N-1)Vin/N and (N-2) Vin/N indicated in the equation, respectively. These references Vcf,N-1_ref, =(N-1) Vin /N and Vcf,N-2_ref =(N-2)Vin/N are generated in the unit or block Vcf reference generation 358. A difference of voltage Vcf,N-1 of flying capacitor 326 from reference Vcf,N-1_ref leads to the balancing PI block 580 generating a non-zero value of adj1. Similarly, a difference of voltage Vcf,N-2 of flying capacitor 324 from reference Vcf,N-2_ref leads to a non-zero value of adj2 being generated in the balancing PI block 580.

It will be appreciated that, since adj1-adj2 is calculated, an equal increase in voltage of Vcf,N-1 and decrease in voltage Vcf,N-2 will not lead to a change in the current-mode-control reference current ic,N-1. This is logical, as then according to the equation above, the voltage across LN-1 is still Vin/N - Vout. However, any deviation from the steady-state voltage Vin /N - Vout leads to a change in the current-mode-control reference current ic,N-1. Thus values of adj1 and adj2 are used to modify, or adjust, the current control setpoint value for the relevant inductor (ic3 in the above-described example).

The above description, and related embodiments, adjust the current control setpoint based in general on the difference between two measurements - one for each of the flying capacitors - the difference in voltage of which provides the voltage to the inductor. It will be noted that the "first" or lowest inductor L1 310 provides an exception to this generality, since the voltage across it is defined by the voltage difference between flying capacitor 322 (Vcf,1), and the - fixed voltage - ground level. Thus L1 is dependent on only a single adjustment, derived from (Vcf,1 - Vcf, ref, 1).

It will be appreciated, that the sum of the deviations (from their expected values) of the voltages across the flying capacitors will be zero, in the case of perturbations resulting from step changes to the load, since the sum of the deviations corresponds to a deviation of the input voltage, at least in an ideal scenario and in steady state. Although in practice, charge conservation may not result in voltage conservation based on the capacitor values, because of error tolerances and derating. It will also be appreciated that in the case of a step-change in the input voltage, the sum of the deviations from the expected value will not, in general, be zero. In particular, in an input transient scenario, the error will show up on all of the capacitors the moment Vin is stepped, which results a negative voltage error on all of the capacitors,

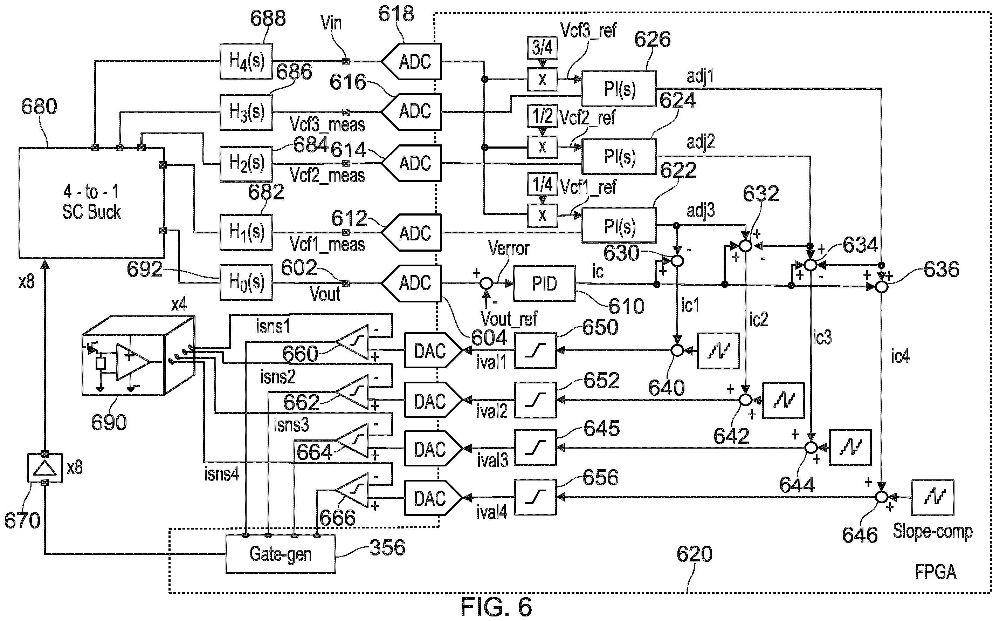

FIG. 6 shows a practical implementation of a control scheme, using valley-current-mode control, in which two adjustment values are used to modify the duty-cycle of individual phases, according to embodiments of the present disclosure. It will be appreciated that most of the scheme (with the notable exception of the slope compensation, and the specific control circuit in control block 690) is independent of the specific form of current mode control (whether peak current-mode control, valley current-mode control, or otherwise).

The main (outer, and slower) control loop comprises the PID controller 610. The output voltage Vout, at node 602 may be, as shown, digitized in an Analog-to-Digital Converter (ADC) 604, from which the reference output voltage Vout_ref is subtracted, to provide an error signal Verror for a PID controller 610. The PID controller 610 provides a "global" setpoint current ic, which is nominally the same for each of the inductor phases. The global setpoint current is adjusted phase-by-phase, to determine the setpoint currents ic1, ic2, ic3, and ic4. The adjustments are made based on measured values (Vcf1_ meas, Vcf2_meas, and Vcf3_meas) of the voltages across the flying capacitors 322, 324 and 326 (or measurements associated therewith, as discussed above). The measurements are digitised by ADCs 612, 614 and 616. The input voltage Vin is also digitised at ADC 618. The nominal value of the voltages across the flying capacitors are calculated from the digitised value of Vin, to provide flying-capacitor reference voltages, Vcf1_ref, Vcf2_ref and Vcf3_ref.

Individual PI subunits 622, 624, 626 of the balancing PI blocks or units 580 determine the appropriate adjustment values adj1, adj2 and adj3 from, respectively, Vcf3_ref and Vcf3_meas, Vcf2_ref and Vcf2_meas, and Vcf1_ref and Vcf1_meas. The adjustment values are then used, generally in pairs, to modify the global current setpoints ic_i, to derive individual phase current setpoints. Thus

$$ic1 = ic - adj3,$$

$$ic2 = ic +adj3 -adj2$$

$$ic3 = ic +adj2 -adj1,$$

and

$$ic4 = ic + adj1.$$

Slope compensation may then be added, in the case of valley current control, to the respective current control setpoints ic1 to ic4, as shown at 640, 642, 644 and 646.

Additional filtering, or signal processing, may be applied as shown at 650, 652, 654 and 656 to result in valley-current control signals ival1 to ival4. The resulting valley-current control values are converted into analogue signals by respective digital to analog converters (DAC). They are then compared with the sensed currents (which is this example shown are valley currents) isns1 to isns4, by comparison units or comparators (which generally include some hysteresis, or latched outputs, as shown). The outputs from the comparison units or comparators 660, 662 ,664 and 666 are input to a gate generation block 356, which outputs gate control signals, which are used, via gate drivers 670, to control the switches in the 4-to-1 series-capacitor buck converter 680. Although the disclosure is not limited thereto, the embodiment shown uses valley current measurement in valley current control. In this case, the sense currents isns1 to isns4 are provided by sensing the low-side switch currents through a series resistance connected to ground, as shown schematically at 690. The skilled person will appreciate that although 690 shows one current sensing implementation that works for valley current-mode control, alternative sensing methods, such as sensefet, vds sensing, may be used for valley current-mode implementation or to enable other types of current-mode control techniques, as mentioned above.

In embodiments such as that shown in FIG. 6, the outer control loop is based on a measured output voltage Vout, which is digitised and compared with the reference value Vout_ref to provide the error signal Verror. This may be applicable for a single-stage converter or even for a two-stage directly coupled converter. However for some applications, the illustrated converter may be combined with a second auxiliary converter which is also supplying power to the same output 602 in parallel to the hybrid DC-DC converter, while being supplied by charge from a buffer capacitor at its input. The hybrid DC-DC converter then delivers the bulk of the output power, while the auxiliary converter assists the hybrid DC-DC converter to deliver transient power to the same output voltage 602, taking transient power from or delivering transient power to the buffer capacitor at its input. The voltage across this input capacitor of the auxiliary converter is named Vaux. , and the control output from the auxiliary converter is used to control the output voltage of the main converter, and the control output of the main converter is used to control the input voltage on a buffer capacitor supplying the auxiliary converter. This can be referred to as cross-coupled control. In such applications, Vout may be replaced at node 602 by the input voltage, Vaux, across the buffer capacitor at the input of the auxiliary converter.

The skilled person will appreciate that, whereas FIG. 6 has been set out diagrammatically in order to aid the reader's understanding of the present disclosure, in practical embodiments, the functionality which is shown as discrete units may be combined or partially combined. Thus, for example the ADCs 604, and 612 to 618, which are indicated as separate components, may be combined or partially combined, and the same digitiser used to digitise different signals at different moments during the conversion cycle. Similarly, the digital to analog converters may be combined or partially combined. Moreover, although as shown, part of the processing (generally depicted by boundary 620), is carried out in the digital domain, this is not mandatory, and more, or even all, of the control process may be implemented in a analogue domain.

H1(s) to H4(s) (shown at 682, 684, 686 and 688) are optional signal conditioners. In particular, they may be buffers to step the voltage for the ADCs. H1-4 typically include step-down buffers, and H0(s) 692 may be a step-up buffer. Additionally, these blocks, and in particular H0(s) may provide noise filtering to obtain a more accurate voltage reading.

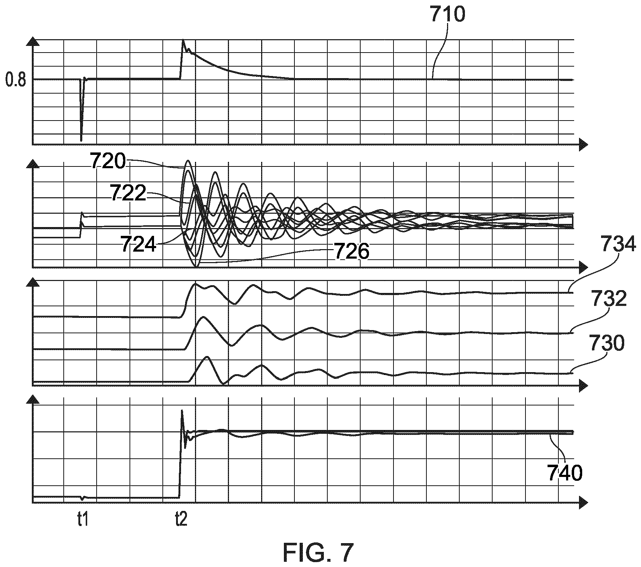

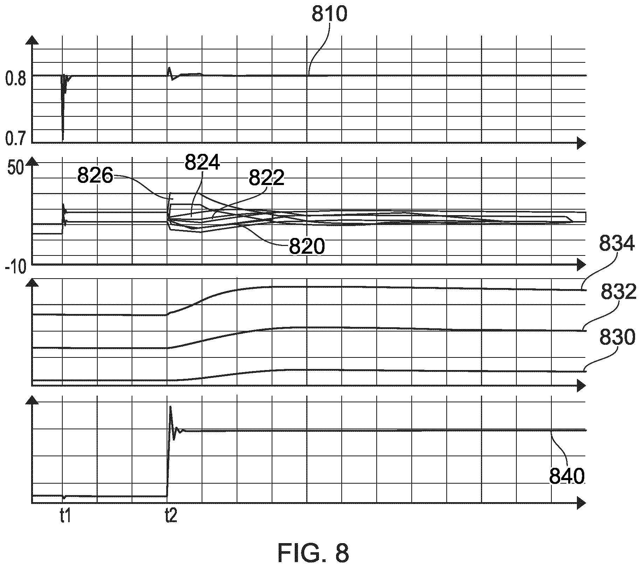

FIG.s 7 and 8 show simulation results for a 4:1 series-capacitor buck hybrid DC-DC converter without (FIG. 7) and with (FIG. 8) adjustment based on flying-capacitor voltage measurements and adjustments. The simulations are based on a switching frequency fsw of 250kHz, inductor values L equals $0.47\mu H$, the inductor series resistance DCR = 0.8 m$\Omega$ the on-resistance of the switches are Rds_on=1 m$\Omega$ (high-side) and Rds_on=0.8 m$\Omega$ (low-side). The input capacitance Cin = $10\mu F$, Cout = 800 $\mu F$, and Cfly = $10\mu F$ (with equivalent series resistances of 1 m$\Omega$, 0.5 m$\Omega$ and 1 m$\Omega$ respectively). The input resistance was set to 300 m$\Omega$, and line inductance to 2.5 $\mu H$.

FIG. 7 shows the use of a conventional voltage-mode control, hence a pulse-width-modulated (PWM) scheme, and FIG. 8 shows the result of using the fixed-frequency Valley-Current-Mode-Control (VCMC) scheme, according to one or more embodiments. The top graphs 710, 810 show the output voltage (controlled to 0.8V), the second graphs show the 4 individual phase currents (720, 722, 724 and 726 without the flying-capacitor-based adjustments, and 820, 822, 824, and 826 with the flying-capacitor-based adjustments). The third graphs show the 3 flying-capacitor voltages (730, 732 and 734 without the flying-capacitor-based adjustments, and 830, 832 and 836 with the flying-capacitor-based adjustments) and the last graphs show the effective voltage at the input of the converter (740, 840). Note that an input power distribution network has been assumed with a series connection of $0.3\Omega$ resistance and $2.5\mu H$ inductance. At the simulation time t1, the load current steps from 30A to 60A, whereas at t2, the input voltage steps from 48V to 60V. Inter-phase resonances are clearly shown especially for the case where the input voltage step is applied.

It will be appreciated that in automotive applications transient specifications are starting to emerge for the bus input voltage for 48V systems. At the same time, the use of hybrid converters for converting large voltage differences (such as directly from 48V to 0.8V such as in these simulations) is increasing, in particular, but not limited to automotive applications. Therefore, especially the resonances shown in FIG.7 at t=4.9ms after an input step are important to address. FIG. 8 shows that with the control scheme according to embodiments of this disclosure, these resonances have been significantly reduced.

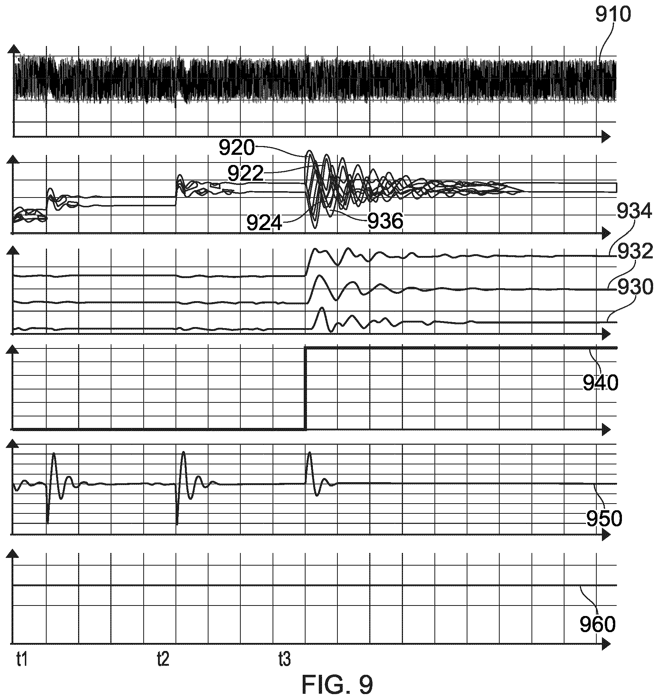

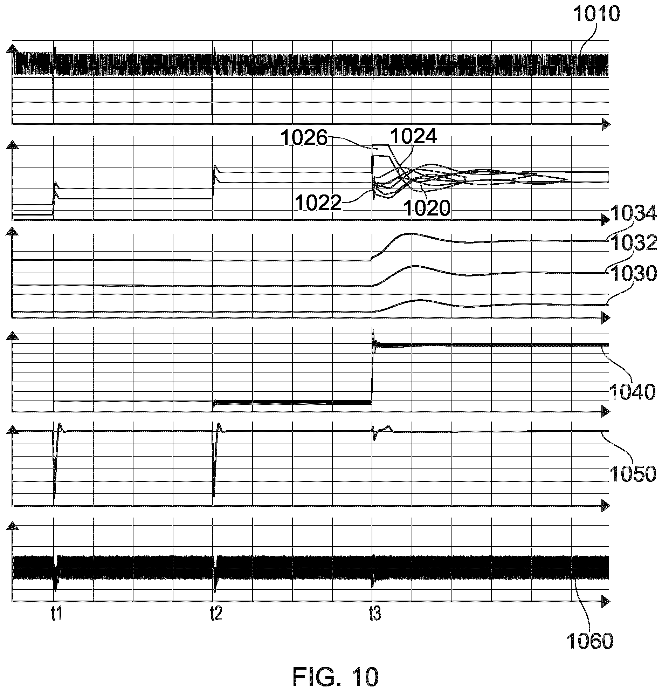

FIG.s 9 and 10 show simulation results for a 4:1 series-capacitor buck hybrid DC-DC converter, configured as a mainstage of a two-stage converter, along with an auxiliary converter, wherein the main and auxiliary converters are cross coupled such that the Vaux from the auxiliary converter is used as the control input to the main converter (in place of Vout), and vice versa. FIG. 9 shows the simulation without the flying-capacitor voltage measurements and adjustments, and FIG. 10 shows a simulation with the flying-capacitor voltage adjustments and simulations. The simulations use values of Cout = $500\mu F$, Caux = 60 $\mu F$, Cin = 10 $\mu F$, Cfly = 10 $\mu F$, the on-resistance of the switches are Rds_on=1 m$\Omega$ (high-side) and Rds_on=0.8 m$\Omega$ (low-side), and a switching frequency of the main converter, fsw,main = 250 kHz. Similar to FIG. 7 and 8, the top graphs 910, 1010 show the output voltage (controlled to 0.8V), the second graphs show the 4 individual phase currents (920, 922, 924 and 926 without the flying-capacitor-based adjustments, and 1020, 1022, 1024, and 1026 with the flying-capacitor-based adjustments). The third graphs show the 3 flying-capacitor voltages (930, 932 and 934 without the flying-capacitor-based adjustments, and 1030, 1032 and 1036 with the flying-capacitor-based adjustments) and the bottom graphs show the effective voltage at the input of the converter (940, 1040). The auxiliary bus voltage is shown at 950 and 1050. Finally, the auxiliary inductor currents are shown, as 960 in FIG. 9 and 1060 in FIG. 10.

At t1, the load steps from 0 to 30A, at t2 the load steps from 30 to 60A, while at t3 the input voltage steps from 48 to 60V with a transient of 2.4V/μs. Similar to FIG. 7, especially the step change to the input voltage causes significant inter-phase resonances, clearly visible in FIG. 9, and these are noticeably reduced by applying the VCMC control method, as shown in FIG 10.

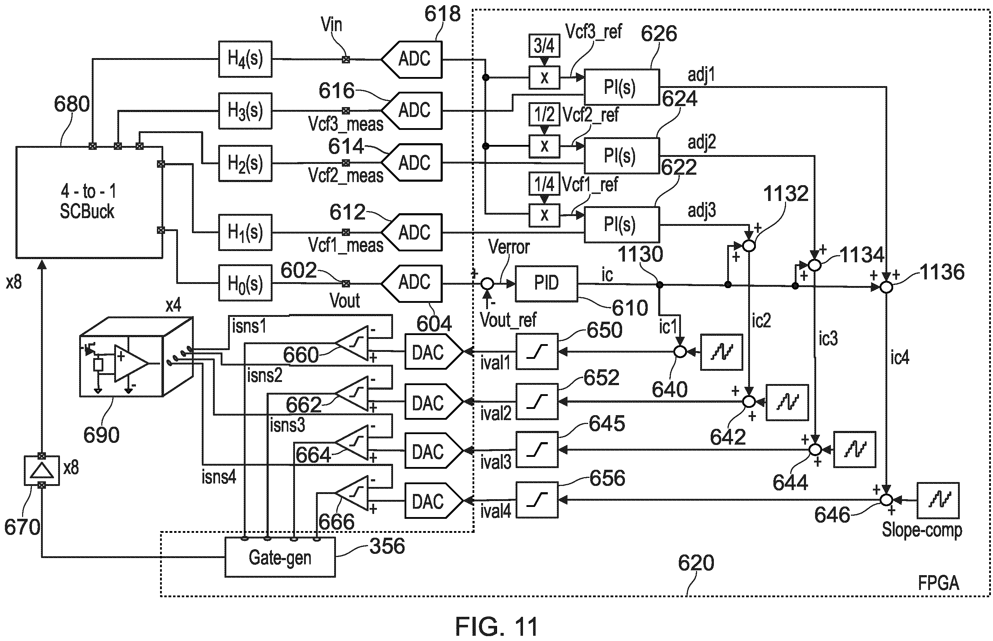

Turning to FIG 11, this illustrates a control scheme using a single adjustment, per phase, for each of the phases. (In practice, as will be discussed further hereinbelow, one of the phases is not directly controlled by monitoring changes to the flying capacitors, since, for an N-phase converter there are only N -1 flying capacitors.) The control scheme shown in FIG. 11 is similar to that shown in FIG 6. Similar to that shown in FIG. 6, the global current control parameter ic is modified only by the value adj1 resulting from the balance PI control subunit 626, as shown at node 1136, to result in the current control setpoint value ic4. However, in contrast to the scheme shown in FIG. 6, the current control setpoints ic2 and ic3 for the "inner" inductor phases (that is to say, all of the phases except the one closest to ground, and the one closest to the supply voltage Vin) are also derived from the global current control setpoint ic, by only a single adjustment term: for ic3 this is the adjustment value adj2 resulting from the balancing PI subunit 624, as shown at 1134, and for ic2 it is the adjustment value adj2 resulting from the balancing PI subunit 622, as shown at node 1132. It will be noted that in this control scheme, no adjustment is made to the global current control setpoint to result in ic1. That is to say, as shown at 1130, ic1 is a direct copy of ic. The skilled person will appreciate that, in the case of perturbations to either the load current or the input voltage, the current control setpoint ic4 may be required to be adjusted. However according to the scheme, this adjustment occurs as a secondary adjustment, rather than directly through measuring one of the flying capacitors. In consequence, the settling time of the currents according to this control scheme is typically longer than that required for the control scheme shown in FIG. 6, although the control scheme shown in FIG. 11 is less complex than that shown in FIG. 6.

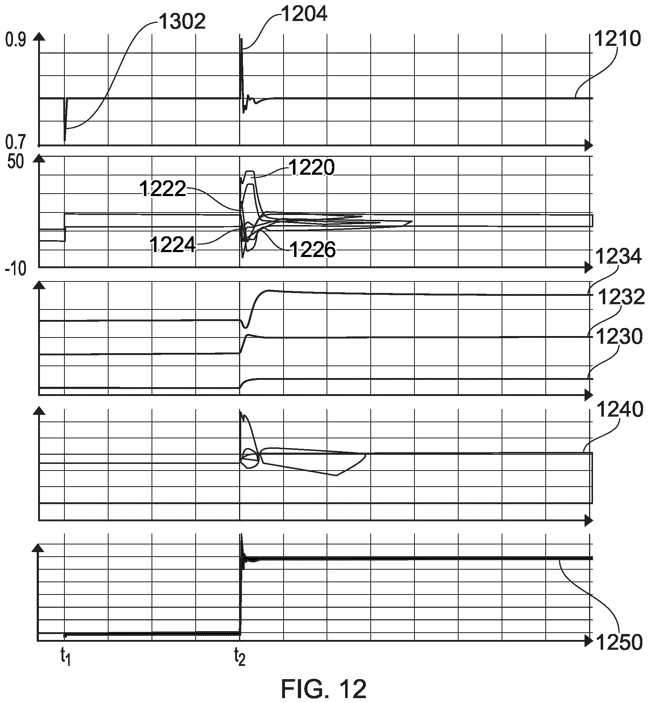

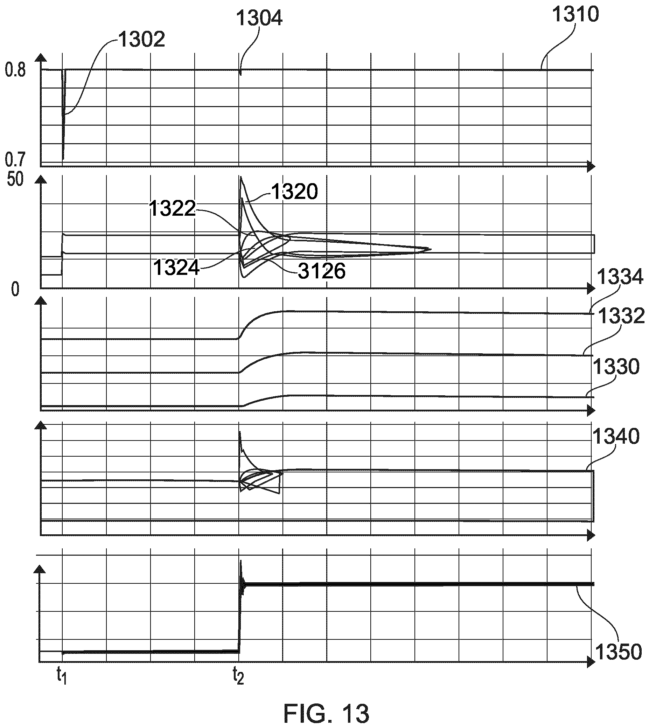

Turning now to FIG.s 12 and 13, these show simulation results for a 4:1 series-capacitor buck hybrid DC-DC converter, operated under peak-current-mode control, at FIG. 12 with a single adjustment term (from a single flying capacitor) applied per phase, and at FIG. 13 with two adjustment terms (that is to say from two neighbouring flying capacitors) applied per phase.

The top graphs 1210, 1310 show the output voltage (controlled to 0.8V), the second graphs show the 4 individual phase currents (1220, 1222, 1224 and 1226 with a single flying-capacitor-based adjustment, and 1320, 1322, 1324, and 1326 with the two flying-capacitor adjustments). The third graphs show the 3 flying-capacitor voltages (1230, 1232 and 1234 with the single flying-capacitor-based adjustment, and 1330, 1332 and 1334 with the two flying-capacitor adjustments), the fourth graphs show the voltage Vds across the low-side switch for each of the phases ( 1240, 1242, 1244 and 1246 with the single flying-capacitor based adjustment, and 1340, 1342, 1344 and 1346 with the two flying-capacitor adjustments), and the last graphs show the effective voltage at the input of the converter (1250, 1350). At the simulation time t1, the load current steps from 30A to 60A, whereas at t2, the input voltage steps from 48V to 60V. As can be seen, the two adjustment term case (figure 13), shows significantly reduced disturbance to the output voltage (barely visible at 1304, compared with that case (figure 12), the disturbance to the output voltage of which is clearly visible at 1204. In both cases, the reaction to the load step, at 1.0ms is observable but very short-lasting, at 1202 and 1302 respectively.

As will have been appreciated by now, embodiments of the present disclosure may allow maintaining full functionality of a current-mode-controlled N-phase hybrid DC-DC converter, without needing to use large flying capacitances. This may assist in achieving volume reduction. Furthermore, maintaining phase current balancing even when using non-uniform control commands to different phases may improve efficiency and reduce ripple on the output voltage. Allowing the use of separate/non-uniform commands for each phase may decrease the response time, typically by N times when using an N-phase hybrid DC-DC converter.

Instead of balancing the currents through individual phase-current monitoring, the phases are monitored through balancing the voltages used to charge the per-phase inductors. For an N-phase series-capacitor hybrid buck converter, the steady-state value is Vin/N. The error generated between the flying-capacitor voltage measurements and references is used to generate adjustment terms to the current commands:

For each individual phase inductor, two flying capacitors are typically consequential to the charging slope; namely the flying capacitor directly connected to the inductor and the capacitor from the higher level. The command for top phase current N will only be adjusted by a deviation of the topmost flying capacitor from (N-1)Vin/N, while the bottom phase current 1 is only adjusted by the deviation of the bottom-most capacitor voltage from Vin/N.

Though the present disclosure is not limited thereto, it may be particularly useful for valley-current-mode-controlled hybrid DC-DC converter. The reason is that valley-current control may allow easier low-side sensing of the current. Combining this valley-current-mode with a correction based on sensing flying-capacitor voltages may help to provide balancing without the need to actually reconstruct the actual inductor currents (which are influenced by the occurring resonances and require more complicated hardware solutions to measure).

Whereas the embodiments herein focus on an N:1 series-capacitor buck hybrid DC-DC converter, the presented disclosure extends to other hybrid DC-DC converters with parallel phases, in which the voltage across the inductor in each phase on one side is determined by, the voltage across a flying capacitor, or the difference in voltages between two or more flying capacitors. Examples are the dual-inductor hybrid converter, or the multi-inductor hybrid converter. The concept of the control scheme is applicable to such converters, that is to say setting a current reference for controlling the peak, average or valley current in each phase using an outer voltage loop, and adjusting this reference per phase based on sensing the difference between the voltage determined by a constellation of flying capacitors and the ideal value (typically Vin/N for an N-phase hybrid converter).

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. FIG. s are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The skilled person will appreciate that, as used herein, terms such as "first" and "second" in expressions such as "the first voltage", the "second voltage" may not refer to separate moments in time, but rather to separate nodes or across separate components. Thus, it may be that, as used herein, a phrase such "the first voltage" may be a value which varies over time.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

**Claims**

1. A method of controlling a hybrid multiphase DC-DC converter comprising a plurality of switched-inductor current paths, the method comprising:

   comparing an output voltage with an output-reference voltage;
   in response to a difference between the output voltage and the output-reference voltage, adjusting a respective current control parameter of each current path;
   comparing a first voltage across a first flying capacitor with a first capacitor-reference voltage; and
   in response to a difference between the first voltage across the first flying capacitor and the first capacitor-reference voltage, modifying the respective current control parameter of a one of the current paths.

2. The method of claim 1, wherein the current control parameter of each current path is a one of a group consisting of a peak current setpoint of the respective current path, a valley current setpoint of the respective current path, and an average current setpoint of the respective current path.

3. The method of claim 1 or 2, wherein each switched-inductor current paths is switchable between an on-time and an off-time, wherein a current in the switched-inductor increases during the on-time and decreases during the off-time.

4. The method of claim 3, wherein the hybrid multiphase DC-DC converter is configured to operate in a fixed-frequency mode.

5. The method of claim 4 wherein the current control parameter of each current path is a peak current setpoint; and modifying the peak current setpoint comprising delaying an ending of the on-time in response to a negative difference between the first voltage across the first flying capacitor and the first capacitor-reference voltage, and advancing the ending of the on-time in response to a positive difference between the first voltage across the first flying capacitor and the first capacitor-reference voltage.

6. The method of claim 4 wherein the current control parameter of each current path is a valley current setpoint; and modifying the valley current setpoint comprising advancing a starting of the on-time in response to a negative difference between the first voltage across the first flying capacitor and the first capacitor-reference voltage, and delaying the starting of the on-time in response to a positive difference between the first voltage across the first flying capacitor and the first capacitor-reference voltage.

7. The method of claim 1, wherein the current control parameter of each current path is a hysteretic setpoint corresponding to a difference between a peak current and a valley current, and the hybrid multiphase DC-DC converter is configured to operate in a hysteretic mode.

8. The method of any preceding claim, wherein the hybrid multiphase DC-DC converter further comprises at least one further flying capacitor, the method further comprising:
comparing a respective voltage across each of at least one further flying capacitor with a respective capacitor-reference voltage, and modifying a respective control parameter of a respective one of the current paths in response to a difference between the respective voltage across the respective one of the at least one further flying capacitor and the respective capacitor-reference voltage.

9. The method of any of claims 1 to 7 claim, further comprising:

comparing a second voltage across a second flying capacitor with a second capacitor-reference voltage; and wherein modifying the respective control parameter of the one of the current paths comprising modifying the control parameter by an amount which depends on a difference between a first offset and a second offset, wherein: the first offset is the difference between the first voltage across the first flying capacitor and the first capacitor-reference voltage,
and the second offset is a difference between the second voltage across the second capacitor and the second capacitor-reference voltage.

10. The method of claim 9, wherein the hybrid multiphase DC-DC converter further comprises at least one further flying capacitor, the method further comprising:

comparing a respective voltage across each of at the least one further flying capacitor with a respective capacitor-reference voltage;
and, in response to a difference therebetween, modifying a respective control parameter of each current path having an inductor input voltage at least partly defined by the voltage across that respective flying capacitor.

11. The method of any preceding claim, wherein the DC-DC converter is one of a N:1 series-capacitor buck hybrid converter, a dual-inductor hybrid converter, and a multi-inductor hybrid converter.

12. A controller for a hybrid multiphase DC-DC converter comprising a plurality of switched-inductor current paths, the controller comprising:

an outer comparison unit configured to compare an output voltage of the converter with an output-reference voltage;

an outer loop adjustment circuit configured to, in response to a difference between the output voltage and the output-reference voltage, adjust a respective current control parameter of each current path;

a first inner comparison unit configured to compare a first voltage across a first flying capacitor with a first capacitor-reference voltage; and

an inner loop adjustment circuit configured to, in response to a difference between the first voltage across the first flying capacitor and the first capacitor-reference voltage, modifying the respective current control parameter of a one of the current paths.

13. The controller of claim 12, wherein the current control parameter of each current path is a one of a group consisting of a peak current setpoint of the respective current path, a valley current setpoint of the respective current path, and an average current setpoint of the respective current path.

14. The controller of claim 12 or 13, further comprising a plurality of gate-control circuits configured to switch each respective switched-inductor current path between and on-state for an on-time and an off-state for an off-time, wherein a current in the switched-inductor increases during the on-time and decreases during the off-time.

15. The controller of claim 13, wherein the current control parameter of each current path is a valley current setpoint; and modifying the valley current setpoint comprises advancing a starting of the on-time in response to a negative difference between the first voltage across the first flying capacitor and the first capacitor-reference voltage, and delaying the starting of the on-time in response to a positive difference between the first voltage across the first flying capacitor and the first capacitor-reference voltage.

FIG. 2

FIG. 1 (Prior Art)

FIG. 3 (Prior Art)

FIG. 3A

FIG. 4

FIG. 5

EP 4 693 856 A1

FIG. 5A

FIG. 6

FIG. 7

FIG. 8

FIG. 9

FIG. 10

FIG. 11

EP 4 693 856 A1

FIG. 12

FIG. 13

Europäisches
Patentamt
European
Patent Office
Office européen
des brevets

# EUROPEAN SEARCH REPORT

**Application Number**

EP 24 19 3598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 244 115 A (SHENZHEN YONGXIAO SCIENCE AND TECH CO LTD) 25 March 2022 (2022-03-25) | 1-4,7-14 | INV. H02M1/00 H02M3/07 |
| Y | * abstract; figures 2,4 * | 1,12 | H02M3/158 |
| A | | 5,6,15 | H02M1/14 |
| | ----- | | |
| X | DA SILVA CARVALHO SAMUEL ET AL: "A low-volume multi-phase interleaved Dc-Dc converter for high step-down applications with auto-balancing of phase currents", 2017 IEEE APPLIED POWER ELECTRONICS CONFERENCE AND EXPOSITION (APEC), IEEE, 26 March 2017 (2017-03-26), pages 142-148, XP033098277, DOI: 10.1109/APEC.2017.7930685 [retrieved on 2017-05-17] | 1,12 | |
| Y | * pages 142-143; figure 1 * | 1,12 | |
| | ----- | | |
| Y | BIESTERFELD NATHAN ET AL: "Steady-State Analysis of Series-Capacitor Buck Converters in Discontinuous Capacitor Voltage Mode", 2023 IEEE 24TH WORKSHOP ON CONTROL AND MODELING FOR POWER ELECTRONICS (COMPEL), IEEE, 25 June 2023 (2023-06-25), pages 1-6, XP034406714, DOI: 10.1109/COMPEL52896.2023.10220970 [retrieved on 2023-08-23] * pages 1-3; figure 1 * | 1,12 | |
| | ----- -/-- | | |

**TECHNICAL FIELDS SEARCHED (IPC)**

H02M

The present search report has been drawn up for all claims

| Place of search | Date of completion of the search | Examiner |
|---|---|---|
| The Hague | 15 January 2025 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 19 3598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHEN ZHANGYONG ET AL: "Current Sharing Strategy of Three-Phase Series Capacitor Buck Converter for Wide Output Voltage Range Application", IEEE JOURNAL OF EMERGING AND SELECTED TOPICS IN POWER ELECTRONICS, IEEE, PISCATAWAY, NJ, USA, vol. 11, no. 1, 19 July 2022 (2022-07-19), pages 836-849, XP011933630, ISSN: 2168-6777, DOI: 10.1109/JESTPE.2022.3192540 [retrieved on 2022-07-20] * page 836 - page 839; figures 1-2 * ----- | 1,12 | |
| | | | TECHNICAL FIELDS SEARCHED (IPC) |

The present search report has been drawn up for all claims

| Place of search | Date of completion of the search | Examiner |
|---|---|---|
| The Hague | 15 January 2025 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 3598

This annex lists the patent family members relating to the patent documents cited in  the above-mentioned European search report.
The members are as contained in the European Patent Office EDP file on
The European Patent Office is in no way liable for these particulars which are merely given for the purpose of information.

15-01-2025

| Patent document cited in search report | Publication date | Patent family member(s) | Publication date |
|---|---|---|---|
| CN 114244115     A | 25-03-2022 | NONE | |

For more details about this annex : see Official Journal of the European Patent Office, No. 12/82

EPO FORM P0459